# EUROPÄISCHE PATENTSCHRIFT

(11) **EP 0 503 446 B1**
(45) Veröffentlichungstag und Bekanntmachung des Hinweises auf die Patenterteilung: **15.11.1995**
(21) Anmeldenummer: 92103649.7
(22) Anmeldetag: 03.03.1992
(51) Int. Cl.: H02M 3/335

(54) **Verfahren zum Betreiben eines Schaltreglers sowie Schaltregler**
Method for operating a switching regulator, and switching regulator
Méthode de fonctionnement d'un régulateur à découpage et régulateur à découpage

(30) Priorität: 14.03.1991 DE 4108234
(43) Veröffentlichungstag der Anmeldung: 16.09.1992
(73) Patentinhaber: ANT Nachrichtentechnik GmbH, D-71522 Backnang (DE)
(72) Erfinder: Grünsch, Eckhardt, W-7173 Mainhardt (DE); Grefkes, Hans,, W-7141 Oberstenfeld (DE); Prisille, Klaus,, W-7150 Backnang (DE); Uhrich, Peter, Dipl.-Ing., W-7152 Aspach (DE)

(56) Entgegenhaltungen:
- DE-A- 3 438 251
- DE-A- 3 701 395
- GB-A- 2 073 918

## Beschreibung

Die Erfindung geht aus von einem Verfahren gemäß dem Oberbegriff des Patentanspruchs 1.

Schaltregler werden üblicherweise auf konstante Ausgangsspannung geregelt, indem die Steuerpulse für das Schaltregler-Stellglied in ihrer Länge - Pulsbreitenregelung - oder bezüglich ihrer Pausenzeit - Pulsfrequenzregelung - in Abhängigkeit der Höhe der Ausgangsspannung aufbereitet werden (DE 27 15 571 C2 oder DE 37 01 395 A1). Wird ein solcher Schaltregler über einen Vorwiderstand, beispielsweise den Leitungswiderstand eines Kommunikationsnetzes betrieben, so könnte der Schaltregler in einen Arbeitspunkt gelangen aus dem er selbständig nicht mehr herauskommen kann. Dieser Fall tritt beispielsweise dann ein, wenn die Belastung des Schaltreglers so groß wird, daß die Eingangsspannung U_{E} des Schaltreglers kleiner wird als die halbe Speisespannung U_{Q} und damit ein Hochlaufen des Schaltreglers nicht mehr möglich ist. Als Speisespannung U_{Q} sei hier jene Spannung definiert, die am leitungsfernen Ende des Schaltreglers beispielsweise zwischen den Klemmen der Amtsbatterie auftritt.

Beim Verfahren gemäß DE 37 01 395 A1 wird verhindert, daß der Schaltregler einen solchen Arbeitspunkt annehmen kann, indem der Schaltregler vorher abgeschaltet wird.

Aus der GB-A- 2 073 918 ist ein Schaltregler bekannt, der zwei Regelschleifen aufweist. Die erste Regelschleife dient dazu, die Ausgangsspannung konstant zu halten; d.h. die Einschaltpulse für das Stellglied werden in Abhängigkeit der Ausgangsspannung verändert. Die zweite Schleife dient dazu, die Einschaltimpulse für das Stellglied zu verringern, d.h. das Tastverhältnis zu verkleinern, wenn am Ausgang eine Überlast bzw. ein Kurzschluß anliegt. In Abhängigkeit der Höhe der Eingangsspannung wird die Pulsbreite auf einen Maximalwert begrenzt. Dazu ist dem Pulsbreitenmodulator ein Begrenzer nachgeschaltet.

Aufgabe der Erfindung ist es ausgehend vom Oberbegriff des Patentanspruchs 1 ein Verfahren zum Betreiben eines Schaltregler anzugeben, welches einerseits verhindert, daß der Schaltregler in einen unerwünschten Arbeitspunkt gelangen kann, und andererseits Betriebsunterbrechungen an Geräten, die über den Schaltregler gespeist werden, verhindert. Außerdem soll ein Schaltregler hierzu aufgezeigt werden. Diese Aufgabe wird bezüglich des Verfahrens durch die Schritte des Anspruchs 1 und bezüglich des Schaltreglers durch die Merkmale des Anspruchs 4 gelöst. Die weiteren Ansprüche enthalten vorteilhafte Weiterbildungen des Verfahrens/ des Schaltreglers.

Durch die Maßnahmen der Erfindung treten auch bei Überlastung des Schaltreglers keine unerwünschten Betriebsunterbrechungen auf. Auch bei Leistungsentnahme über den Punkt der Leistungsanpassung hinaus, beispielsweise bei über den Leitungswiderstand eines Kommunikationsnetzes betriebenen Schaltreglern, muß der Schaltregler nicht außer Betrieb gesetzt werden. Beim Verfahren nach der Erfindung ist im Überlastungsfall zwar nicht mehr die volle Ausgangsleistung von einer angeschlossenen Last entnehmbar, für die Speisequelle und Schaltregler konzipiert sind; jedoch kann ein Betrieb immer noch erfolgen. Insbesondere Sprechstellenverstärker, etwa gemäß DR 40 2A 907.7, lassen sich über Schaltregler gemäß der Erfindung vorteilhaft speisen, da ein Absinken der Verstärkerausgangsleistung eher hinzunehmen ist als der Totalausfall einer Sprechverbindung. Auch kurzzeitige Ausfälle eines Schaltreglers, die die Sprachsignale verzerren würden, treten bei der Erfindung nicht auf.

Ein Schaltregler nach der Erfindung benötigt keine aufwendigen Steuerbausteine für die Ansteuerung des Stellgliedes.

Anhand der Zeichnungen wird ein Ausführungsbeispiel der Erfindung nun näher erläutert. Es zeigen
Figur 1 ein Prinzipschaltbild eines Schaltreglers gemaß der Erfindung und
Figur 2 Strom-Zeit-Diagramme von Steuerpulsen und des Stromes durch das Stellglied für bestimmte Betriebszustände.

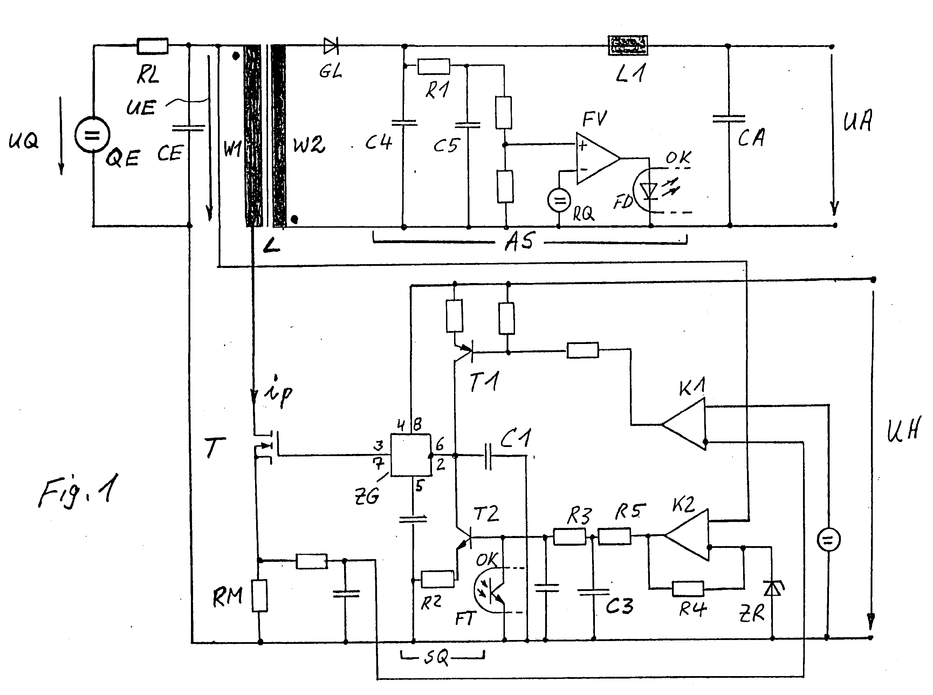

Der Schaltregler gemäß Figur 1 ist vom Typ eines Sperrwandlers mit galvanischer Trennung zwischen Primär- und Sekundärkreis. Zur galvanischen Trennung weist die Schaltregler-Induktivität L eine Primärwicklung W1 auf, die in Serie mit dem Leitungswiderstand RL, dem Schaltregler-Stellglied T, hier als Feldeffekttransistor ausgebildet, und dem Strommeßwiderstand RM an die Gleichspannungsquelle QE mit der Spannung UQ angeschlossen ist. Am Eingangskondensator CE des Schaltreglers fällt die Eingangsspannung UE des Schaltreglers ab. Der Leitungswiderstand RL ist ein Ersatzwiderstand, in dem die Leitungsverluste der Zuleitungen, z.B. die a- und b-Adern im Fernsprechnetz, zwischen der Gleichspannungsquelle QE und dem Schaltregler zusammengefaßt sind. Der Sekundärkreis des Schaltreglers besteht aus der Sekundär-Wicklung W2 der Induktivität L, dem Gleichrichter GL und dem Siebglied - Drossel L1 im Längszweig und Ausgangskondensator CA im Querzweig. Die Ausgangsspannung UA des Schaltreglers wird über dem Ausgangskondensator CA abgegriffen. Zur Erzeugung eines Signals in Abhängigkeit der Ausgangsspannung UA des Schaltreglers ist eine Auswerteschaltung AS vorgesehen. Es wird zwischen Gleichrichter GL und Siebglied L1, CA über ein RC-Integrationsglied C4, R1, C5 die gleichgerichtete Sekundärspannung erfaßt und über einen Spannungsteiler in üblicher Weise einem Fehlersignalverstärker FV zugeführt, der die Fotodiode FD eines Optokopplers OK dann leitend steuert, wenn die Spannung am invertierenden Eingang die Spannung der Referenzguelle RQ überschreitet. Das so gewonnene ausgangsspannungsabhängige Signal gelangt über den Fototransistor FT des Optokopplers OK in den Primärkreis und wird dort zusammen mit anderen Steuersignalen für die Aufbereitung der Steuerpulse für das Stellglied T verwendet.

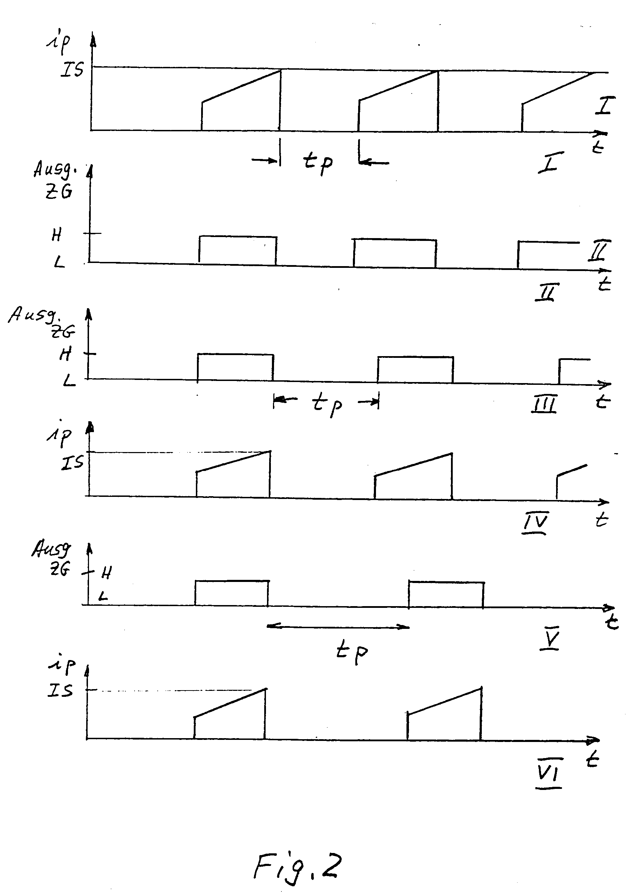

Für die Aufbereitung der Steuerpulse für das Stellglied wird auch der Energieaufnahmestrom ip des Schaltreglers herangezogen, der über den Strommeßwiderstand RM erfaßt wird. Zur nachfolgenden Schilderung der Ansteuerung des Stellgliedes T sei angenommen, daß das Stellglied T leitend sei. Der Energieaufnahmestrom ip - siehe Figur 2 Zeile I - beginnt anzusteigen. Ist ein vorgegebener Spitzenwert IS erreicht, schaltet der Schwellwertkomparator K1, der den Spannungsabfall am Strommeßwiderstand RM an seinem invertierenden Eingang zugeführt bekommt und diesen Spannungsabfall mit der Referenzspannung vergleicht, auf Low. Dieses Low-Potential gelangt an die Basis des pnp Transistors T1. Da der Emitter dieses Transistors T1 am positiven Potential einer Hilfsspannung UH liegt wird in diesem Falle der in der Kollektorleitung des Transistors T1 befindliche Kondensator C1 geladen. Dieser Kondensator C1 liegt am Steuereingang der Zeitgeberschaltung ZG für das Stellglied T und wirkt so als frequenzbestimmender Kondensator für diese Zeitgeberschaltung ZG. Als Zeitgeberschaltung ZG kann z. B. der "Timer-IC" NE 555 oder 7555 verwendet werden, dessen Innenbeschaltung und Funktionsweise aus zahlreichen Datenbüchern bekannt ist. In der EP 20 56 30 B1 ist sowohl die Innenbeschaltung wie auch die prinzipielle Verwendung dieses Timer ICs als Zeitgeber für ein Schaltregler-Stellglied aufgezeigt. Der Timer-IC wirkt in der aufgezeigten Beschaltung als Komparator mit zwei Schwellwerten und zwar 2/3 UH und 1/3 UH. Wenn der frequenzbestimmende Kondensator C1 auf eine Spannung UC1 = 2/3 UH aufgeladen ist, wird das Stellglied T über den Timer-IC, der als Inverter wirkt und demnach an seinem Ausgang dann L-Potential führt, abgeschaltet. Parallel zu dem frequenzbestimmenden Kondensator C1 liegt eine steuerbare Stromquelle SQ. Diese Stromquelle SQ besteht aus dem npn-Transistor T2, seinem Emitter-Widerstand R2, und den Widerständen R3, R5, R4 sowie der Zenerdiode ZR in seiner Basiszuleitung. Wenn die Stromquelle SQ nicht gesteuert ist, d.h. an der Basis des Transistors T2 erscheint weder ein vom Fototransistor FT des Optokopplers OK noch ein vom Ausgang, des Schwellwertkomparators K1 herrührendes Steuersignal, weist die Stromquelle SQ ihren maximalen Strom auf und der Kondensator C1 kann in der kürzest möglichen vorgegebenen Entladezeit entladen werden. Wenn bei einer solchen Entladung des Kondensators C1 die untere Schwelle UC1 = 1/3 UH erreicht wird, springt der Ausgang des Timer-IC da er als Inverter wirkt auf H und schaltet das Stellglied T wieder ein. Wie Figur 2, Zeile II zeigt, ist die Wiederholfrequenz für die Steuerpulse des Stellgliedes T dann am größten und die Pausenzeit tp zwischen zwei solcher Steuerpulse am kleinsten. Befindet sich die Stromquelle SQ im Steuerbetrieb, wird von ihr ein geringerer Strom getrieben, so daß dann der frequenzbestimmende Kondensator C1 langsamer entladen wird und die untere Schwelle UC1 = 1/3 UH später erreicht wird. Dies führt dazu, daß das Stellglied T in diesem Falle später wiedereingeschaltet wird. Die Steuerung der Stromquelle SQ erfolgt im Normalbetrieb, d.h. die Engangsspannung UE des Schaltreglers ist ausreichend hoch im Vergleich zur Spannung an der Speisequelle QE, über den Fototransistor FT in Abhängigkeit der Ausgangsspannung UA. Eine Erhöhung der Ausgangsspannung UA - Entlastung des Schaltreglers - führt zu einer Erniedrigung des Stromes der Stromquelle SQ und damit zur Verlängerung der Pausenzeit tp zwischen den Steuerpulsen für das Stellglied T (Figur 2, Zeilen III und IV) und damit zur Verringerung der vom Schaltregler abgegebenen Leistung (Strom-Zeit-Integral über ip).

Bei Überlastung des Schaltreglers würden die Steuerpulse für das Stellglied immer dichter zusammenrücken und so den Schaltregler in einen Arbeitspunkt führen aus dem er selbständig nicht mehr herauskommt. Die Eingangsspannung UE des Schaltreglers würde dann geringer werden als der Spannungsabfall am Leitungswiderstand RL. Um dies zu verhindern, wird erfindungsgemäß nicht mehr die Ausgangsspannung UA geregelt, sondern die Eingangsspannung auf einen konstanten Wert unterhalb der Normalversorgungsspannung geregelt, indem die Wiederholfrequenz (alternativ dazu: das Tastverhältnis) der Steuerpulse für das Schaltregler-Stellglied T verkleinert wird und somit die vom Schaltregler abgebbare Leistung verringert wird, obwohl für die angeschlossene Last mehr Leistung erforderlich wäre. Hierzu wird die Eingangsspannung UE des Schaltreglers mit einem Schwellwertkomparator K2 über einen Spannungsteiler erfaßt. Unterschreitet die erfaßte Eingangsspannung UE die Referenzspannung der Zenerdiode ZR, die am invertierenden Eingang des Schwellwertkomparators K2 angeschlossen ist, wird der Kondensator C3 am Ausgang des Schwellwertkomparators K2 über den Widerstand R5 etwas entladen, so daß das Basispotential am Transistor T2 der Stromquelle SQ absinkt. Da nun die Stromquelle SQ einen geringeren Strom treibt, wird der frequenzbestimmende Kondensator C1 langsamer entladen, was wiederum dazu führt, daß die Pausenzeit tp für die Steuerpulse des Stellgliedes T verlängert wird. Die Regelschleife wird so dimensioniert, daß die Eingangsspannung des Schaltreglers auch bei Überlastung konstant bleibt, vorteilhafterweise UE = 1/2 UQ. Die Steuerpulse für das Stellglied T und der Energieaufnahmestrom ip erscheinen dann beispielsweise wie in Figur 2, Zeilen V und VI dargestellt. Die Wiederholfrequenz wird hier in dem Maße verringert (die Pausenzeit tp in dem Maße vergrößert), wie die Eingangsspannung UE unter den konstanten Wert UE = 1/2 UQ unterhalb der Normalversorgungsspannung absinken würde.

## Patentansprüche

1. Verfahren zum Betreiben eines als Gleichspannswandler ausgebildeten Schaltregelers zum Anschluß über einen Leitungswiderstand an eine Gleichspannungsquelle (QE), wobei im Normalbetrieb an dem Eingang des Schaltreglers eine Normalversorgungsspannung auftritt und, bei dem im Normalbetrieb die Ausgangsspannung konstant geregelt wird, indem das Tastverhältnis und/oder die Wiederholfrequenz der Steuerpulse für das Schaltregler-Stellglied in Abhängigkeit der Höhe der Ausgangsspannung verändert wird, dadurch gekennzeichnet, daß bei Überlastung des Schaltreglers und Absinken der Eingangsspannung unter die Normalversorgungsspannung nicht mehr die Ausgangsspannung geregelt wird, sondern daß die Eingangsspannung auf einen konstanten Wert unterhalb der Normalversorgungsspannung geregelt wird, indem das Tastverhältnis verkleinert und/oder die Wiederholfrequenz der Steuerpulse für das Schaltregler-Stellglied verkleinert wird.

2. Verfahren nach Anspruch 1, dadurch gekennzeichnet, daß im Normalbetrieb des Schaltreglers die Wiederholfrequenz der Steuerpulse für das Stellglied in Abhängigkeit der Ausgangsspannung in dem Sinne beeinflußt wird, daß bei absinkender Ausgangsspannung die Wiederholfrequenz vergrößert wird, und daß diese Wiederholfrequenz bei Überlastung in dem Maße verringert wird, wie die Eingangsspannung des Schaltreglers unter den konstanten Wert unterhalb der Normalversorgungsspannung absinken würde.

3. Verfahren nach Anspruch 1 oder 2 insbesondere für einen über einen Widerstand gespeisten Schaltregler, dadurch gekennzeichnet, daß der Wert auf den die Eingangsspannung geregelt wird ungefähr der Hälfte der Normalversorgungsspannung entspricht.

4. Schaltregler zum Durchführen des Verfahrens nach einem der Ansprüche 1 bis 3, der als Gleichspannungswandler ausgebildet ist, zum Anschluß über einen Leitungswiderstand an eine Gleichspannungsquelle (QE) und wobei im Normalbetrieb eine Normalversorgungsspannung an den Eingangsklemmen auftritt, wobei der Schaltregler aus folgenden Baugruppen besteht:
- einer Zeitgeberschaltung (ZG) zur Ansteuerung des Stellgliedes (T),
- einer Parallelschaltung eines Ladekondensators (C1) und einer steuerbaren Stromquelle (SQ) am Steuereingang der Zeitgeberschaltung (ZG),
- einem Schwellwertkomparator (K2) zur Erfassung der Höhe der Schaltreglereingangsspannung (UE), welcher mit der steuerbaren Stromquelle (SQ) derart verbunden ist, daß sich der Strom der Stromquelle (SQ) und damit die Wiederholfrequenz der Steuerpulse für das Stellglied (T) in dem Maße verringert, wie die Höhe der Eingangsspannung (UE) des Schaltreglers unter einen/den konstanten Wert unterhalb der Normalversorungsspannung, auf den die Eingangsspannung geregelt wird, absinken würde,
- Mitteln (AS, SQ) zur Regelung des Tastverhältnisses und/oder der Wiederholfrequenz in Abhängigkeit der Ausgangsspannung (UA).

5. Schaltregler nach Anspruch 4, gekennzeichnet durch eine Einrichtung (RM, K2) zur Erfassung des Energieaufnahmestromes des Schaltreglers und zur Steuerung der Zeitgeberschaltung (ZG) derart, daß das Stellglied (T) periodisch abgeschaltet wird, wenn der Energieaufnahmestrom einen vorgegebenen Spitzenwert (IS) erreicht hat.

6. Schaltregler nach Anspruch 4 oder 5, gekennzeichnet durch eine Auswerteschaltung (AS) für die Ausgangsspannung (UA) des Schaltreglers zur Bestimmung der Entladezeit des Ladekondensator (C1) und damit der Wiederholfrequenz der Steuerpulse für das Stellglied (T).

## Claims

1. Method for operating a switched mode regulator which is designed as a DC/DC voltage converter, for connection via a line resistor to a DC voltage source (QE), a normal supply voltage occurring at the input of the switched mode regulator in normal operation and in the case of which the output voltage is regulated at a constant level in normal operation in that the duty ratio and/or the repetition frequency of the control pulses for the switched mode regulator control element are/is varied as a function of the magnitude of the output voltage, characterized in that the output voltage is no longer regulated in the event of an overload on the switched mode regulator and a reduction in the input voltage below the normal supply voltage, but in that the input voltage is regulated at a constant value below the normal supply voltage in that the duty ratio is reduced and/or the repetition frequency of the control pulses for the switched mode regulator control element is reduced.

2. Method according to Claim 1, characterized in that, in normal operation of the switched mode regulator, the repetition frequency of the control pulses for the control element is influenced as a function of the output voltage in the sense that the repetition frequency is increased when the output voltage falls, and in that this repetition frequency is reduced in the event of an overload to the extent that the input voltage of the switched mode regulator has fallen below the constant value below the normal supply voltage.

3. Method according to Claim 1 or 2 in particular for a switched mode regulator which is supplied via a resistor, characterized in that the value at which the input voltage is regulated is approximately half the normal supply voltage.

4. Switched mode regulator for carrying out the method according to one of Claims 1 to 3, which is designed as a DC/DC voltage converter, for connection via a line resistor to a DC voltage source (QE) and a normal supply voltage occurring at the input terminals in normal operation, the switched mode regulator comprising the following assemblies:
- a timer circuit (ZG) for driving the control element (T),
- a parallel circuit formed by a charge capacitor (C1) and a controllable current source (SQ) at the control input of the timer circuit (ZG),
- a threshold value comparator (K2) for detecting the magnitude of the switched mode regulator input voltage (UE), which comparator (K2) is connected to the controllable current source (SQ) in such a manner that the current from the current source (SQ) and thus the repetition frequency of the control pulses for the control element (T) are reduced to the extent that the magnitude of the input voltage (UE) of the switched mode regulator has fallen below a/the constant value below the normal supply voltage at which the input voltage is regulated,
- means (AS, SQ) for regulating the duty ratio and/or the repetition frequency as a function of the output voltage (UA).

5. Switched mode regulator according to Claim 4, characterized by a device (RM, K2) for detecting the power consumption current of the switched mode regulator and for controlling the timer circuit (ZG) in such a manner that the control element (T) is turned off periodically when the power consumption current has reached a predetermined peak value (IS).

6. Switched mode regulator according to Claim 4 or 5, characterized by an evaluation circuit (AS) for the output voltage (UA) of the switched mode regulator for determining the discharge time of the charge capacitor (C1) and thus the repetition frequency of the control pulses for the control element (T).

## Revendications

1. Procédé pour faire fonctionner un régulateur à découpage, constitué sous la forme d'un convertisseur continu-continu, pour le raccorder au moyen d'une résistance de ligne à une source de tension continue (QE), une tension normale d'alimentation étant disponible en fonctionnement normal à l'entrée du régulateur à découpage et dans le cas duquel en fonctionnement normal on règle la tension de sortie de façon constante, alors que le taux d'impulsions et/ou la fréquence de répétition des impulsions de commande pour l'élément de réglage du régulateur à découpage, varient en fonction de l'importance de la tension de sortie, procédé caractérisé en ce qu'en cas de surcharge du régulateur à découpage et de chute de la tension d'entrée en dessous de la tension normale d'alimentation, on ne règle plus la tension de sortie, mais on règle la tension d'entrée sur une valeur constante en dessous de la tension normale d'alimentation, alors que le taux d'impulsions diminue et/ou la fréquence de répétition des impulsions de commande pour l'élément de réglage du régulateur à découpage décroît.

2. Procédé selon la revendication 1, caractérisé en ce qu'en fonctionnement normal du régulateur à découpage la fréquence de répétition des impulsions de commande pour le composant de réglage est influencée en fonction de la tension de sortie en ce sens que, quand la tension de sortie décroît, la fréquence de répétition est accrue, et en ce que la fréquence de répétition en cas de surcharge est réduite dans une mesure telle que la tension d'entrée du régulateur à découpage tombe sous la valeur constante en dessous de la tension normale d'alimentation.

3. Procédé selon la revendication 1 ou 2, en particulier pour un régulateur à découpage alimenté au moyen d'une résistance, caractérisé en ce que la valeur sur laquelle est réglée la tension d'entrée correspond environ à la moitié de la tension normale d'alimentation.

4. Régulateur à découpage pour la mise en oeuvre du procédé selon l'une des revendications 1 à 3, qui est constitué sous la forme d'un convertisseur continu-continu pour être raccordé au moyen d'une résistance de ligne à une source de tension continue (QE) et dans le cas duquel, en fonctionnement normal, on a une tension normale d'alimentation aux bornes d'entrée, le régulateur à découpage se composant des groupes de composants suivants :
- un circuit de rythme (ZG) qui sert à commander le composant de réglage (T) ;
- un circuit parallèle se composant d'un condensateur de charge (C1) et d'une source d'intensité commandable (SQ) à l'entrée de commande du circuit de rythme (ZG) ;
- un comparateur à valeur de seuil (K2) pour détecter l'importance de la tension d'entrée du régulateur à découpage (UE), comparateur qui est relié à la source d'intensité commandable d'une manière telle que l'intensité de la source d'intensité (SQ), et de cette façon la fréquence de répétition des impulsions de commande pour le composant de réglage (T), soient réduites dans une mesure telle que l'importance de la tension d'entrée (UE) du régulateur à découpage tombe au dessous d'une valeur/de la valeur constante en dessous de la tension normale d'alimentation, sur laquelle est réglée la tension d'entrée ;
- des moyens (AS, SQ) servant à régler le taux d'impulsions et/ou la fréquence de répétition en fonction de la tension de sortie.

5. Régulateur à découpage selon la revendication 4, caractérisé par un système (RM, K2) qui sert à déterminer l'intensité d'absorption d'énergie du régulateur à découpage et à commander le circuit de rythme (ZG) de telle manière que le composant de réglage (T) soit périodiquement débranché quand l'intensité d'absorption d'énergie a atteint une valeur de pointe (IS) prédéfinie.

6. Régulateur à découpage selon la revendication 5, caractérisé par un circuit d'exploitation (AS) pour la tension de sortie (UA) du régulateur à découpage qui sert à déterminer le temps de décharge du condensateur de charge (C1) et, de cette façon, la fréquence de répétition des impulsions de commande pour le composant de réglage (T).
